# EUROPEAN PATENT APPLICATION

(11) **EP 4 808 072 A1**
(43) Date of publication of application: **16.09.2026**
(21) Application number: 24896182.3
(22) Date of filing: 01.11.2024
(51) Int. Cl.: H04L 45/76

(54) **COMMUNICATION METHOD, AND APPARATUS**

(30) Priority: 27.11.2023 CN 202311602762
(71) Applicant: Huawei Technologies Co., Ltd., Shenzhen, Guangdong 518129 (CN)
(72) Inventor: JIN, Jianwei, Shenzhen, Guangdong 518129 (CN); YANG, Lian, Shenzhen, Guangdong 518129 (CN)
(74) Representative: Isarpatent
(86) International application number: PCT/CN2024/129495
(87) International publication number: WO 2025/113091

(57) **Abstract**

This application provides a communication method and apparatus. In the method, identification information is introduced to distinguish between packets from different cloud platform systems. For example, first identification information is identification information that identifies a first cloud platform system, and each cloud platform node in the first cloud platform system includes the first identification information (therefore, a packet sent by each cloud platform node also includes the first identification information). In this way, a cloud platform system to which a packet sending node belongs is distinguished by using identification information in the packet. In addition, a neighbor entry used for normal communication between nodes in a cloud platform system is configured as a static routing table. Even if different cloud platform systems are interconnected and a network address conflict occurs, nodes in a same cloud platform system can still perform normal communication based on the static routing table, thereby avoiding problems such as incorrect data forwarding and service interruption between different cloud platform systems.

## Description

This application claims priority to Chinese Patent Application No. 202311602762.4, filed with the China National Intellectual Property Administration on November 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A plurality of cloud platform systems can be constructed based on a network function virtualization (network function virtualization, NFV) technology. Each cloud platform system may include one or more cloud platform nodes, and data isolation exists between the cloud platform systems (for example, data is not transmitted between cloud platform nodes in different cloud platform systems). Therefore, when different cloud platform systems internally configure internet protocol (Internet protocol, IP) addresses for cloud platform nodes, a same IP address may be configured for different cloud platform nodes that belong to different cloud platform systems. For example, it is assumed that there are a first cloud platform system (including a first cloud platform node) and a second cloud platform system (including a second cloud platform node), and that IP addresses of the first cloud platform node and the second cloud platform node are the same. Data can be transmitted between different cloud platform systems due to a network configuration error. In this case, two cloud platform nodes (for example, the first cloud platform node and the second cloud platform node) having a same IP address may simultaneously transmit data. Consequently, packet forwarding between different cloud platform systems is abnormal.

### SUMMARY

This application provides a communication method and apparatus. In the method, packets from different cloud platform systems are distinguished by using different identification information, so that packets can be normally forwarded between cloud platform nodes belonging to a same cloud platform system, thereby avoiding abnormal packet forwarding between different cloud platform systems.

According to a first aspect, this application provides a communication method. The method is performed by a second node, or is performed by a component (for example, a processor, a chip, or a chip system) of the second node, or may be performed by a logical module that can implement all or some functions of the second node. For example, the second node may be a cloud platform node, and the cloud platform node is a network device or a server of a cloud computing network infrastructure. The second node receives a first packet from a first node, where the first packet includes routing information of the first node and first identification information of the first node, and the first identification information indicates that the first node belongs to a first cloud platform system. If the first identification information is the same as second identification information of the second node, the second node updates a static routing table of the second node based on the routing information of the first node.

In the method, identification information is introduced to distinguish between packets from different cloud platform systems. For example, the first identification information is identification information that identifies the first cloud platform system, and each cloud platform node in the first cloud platform system includes the first identification information (therefore, a packet sent by each cloud platform node also includes the first identification information). In this way, a cloud platform system to which a packet sending node belongs is distinguished by using identification information in the packet. If the packet sending node and a packet receiving node are cloud platform nodes of a same cloud platform system, the packet can be normally forwarded between the two nodes. In addition, a neighbor entry used for normal communication between nodes in the cloud platform system may be configured as a static routing table, and the static routing table includes routing information between different cloud platform nodes in a same cloud platform system. Therefore, even if different cloud platform systems are interconnected and a network address conflict occurs, nodes in a same cloud platform system can still perform normal communication based on the static routing table, thereby avoiding problems such as incorrect data forwarding and service interruption between different cloud platform systems.

In a possible implementation, after the second node receives the first packet from the first node, if the first identification information is different from the second identification information of the second node, the second node determines that the first node and the second node belong to different cloud platform systems.

In the method, the second node determines, based on the identification information carried in the first packet, that the first node and the second node belong to different cloud platform systems. Optionally, the second node does not update the static routing table of the second node. For example, the routing information of the first node is not added to the static routing table of the second node, to avoid incorrect data forwarding.

In a possible implementation, if the second node determines that the first node and the second node belong to different cloud platform systems, the second node sends first indication information to the first node, where the first indication information indicates that the first node and the second node belong to different cloud platform systems.

In the method, the first indication information is introduced to feed back, to the packet sending node, whether the packet sending node and the packet receiving node belong to a same cloud platform system. For example, when receiving the first indication information sent by the second node, the first node may determine that the first node and the second node belong to different cloud platform systems.

In a possible implementation, the second node receives a second packet from a third node, where the second packet does not include identification information. The second node discards the second packet.

In the method, the second node receives the second packet sent by another node (for example, the third node in a second cloud platform system). If the packet does not carry the identification information of a cloud platform system, the second node discards the packet, and the static routing table of the second node is not updated. In this way, incorrect data forwarding is avoided.

In a possible implementation, the routing information of the first node includes an internet protocol (Internet protocol, IP) address of the first node and a media access control (media access control, MAC) address of the first node.

In a possible implementation, the first identification information or the second identification information is at least one of identity information, a certificate password, or a key.

In a possible implementation, a priority of routing information in the static routing table of the second node is higher than a priority of routing information of a third packet, and the routing information of the third packet is configured according to an address resolution protocol or a neighbor discovery protocol.

In the method, the priority of the routing information in the static routing table is higher than the priority of the routing information configured according to the address resolution protocol or the neighbor discovery protocol. Therefore, the cloud platform node cannot update the static routing table based on the routing information configured according to the address resolution protocol or the neighbor discovery protocol. For example, it is assumed that the routing information of the third packet is configured according to the address resolution protocol or the neighbor discovery protocol. After the second node receives the third packet, the second node does not update the static routing table of the second node based on the routing information of the third packet, to avoid incorrect data forwarding.

According to a second aspect, this application provides a communication method. The method is performed by a first node, or is performed by a component (for example, a processor, a chip, or a chip system) of the first node, or may be performed by a logical module that can implement all or some functions of the first node. For example, the first node may be a cloud platform node, and the cloud platform node is a network device or a server of a cloud computing network infrastructure. The first node generates a first packet, where the first packet includes routing information of the first node and first identification information of the first node, and the first identification information indicates that the first node belongs to a first cloud platform system. The first node sends the first packet.

In the method, identification information is introduced to distinguish between packets from different cloud platform systems. For example, the first identification information is identification information that identifies the first cloud platform system, and each cloud platform node in the first cloud platform system includes the first identification information (therefore, a packet sent by each cloud platform node also includes the first identification information). In this way, a cloud platform system to which a packet sending node belongs is distinguished by using identification information in the packet. If the packet sending node and a packet receiving node are cloud platform nodes of a same cloud platform system, the packet can be normally forwarded between the two nodes, thereby avoiding problems such as incorrect data forwarding and service interruption between different cloud platform systems.

In a possible implementation, the routing information of the first node includes an IP address of the first node and a MAC address of the first node.

In a possible implementation, the first identification information is at least one of identity information, a certificate password, or a key.

According to a third aspect, this application provides a system method. The method is implemented through interaction between a first node and a second node. The second node may be referred to as a first communication apparatus, and the first node may be referred to as a second communication apparatus. For example, the first node may be a virtual machine, the second node may be a server, and the communication method includes the following steps: The first node sends a first packet, where the first packet includes routing information of the first node and first identification information of the first node, and the first identification information indicates that the first node belongs to a first cloud platform system; and correspondingly, the second node receives the first packet. If the first identification information is the same as second identification information of the second node, the second node updates a static routing table of the second node based on the routing information of the first node.

In the method, identification information is introduced to distinguish between packets from different cloud platform systems. For example, the first identification information is identification information that identifies the first cloud platform system, and each cloud platform node in the first cloud platform system includes the first identification information (therefore, a packet sent by each cloud platform node also includes the first identification information). In this way, a cloud platform system to which a packet sending node belongs is distinguished by using identification information in the packet. If the packet sending node and a packet receiving node are cloud platform nodes of a same cloud platform system, the packet can be normally forwarded between the two nodes. In addition, a neighbor entry used for normal communication between nodes in the cloud platform system may be configured as a static routing table, and the static routing table includes only routing information between different cloud platform nodes in a same cloud platform system. Therefore, even if different cloud platform systems are interconnected and a network address conflict occurs, nodes in a same cloud platform system can still perform normal communication based on the static routing table, thereby avoiding problems such as incorrect data forwarding and service interruption between different cloud platform systems.

Optionally, for another implementation of the communication method, refer to corresponding descriptions in the first aspect and the second aspect. Details are not described herein again.

According to a fourth aspect, this application provides a communication apparatus. The communication apparatus may be a device like a server, a virtual machine, or a controller designed based on a virtualization technology, or may be an apparatus of the foregoing device, or an apparatus that can be used together with the foregoing device. In a possible implementation, the communication apparatus may include a functional module. The functional module may be a hardware circuit, or may be software, or may be implemented by a hardware circuit in combination with software.

In a possible implementation, the communication apparatus includes a communication unit and a processing unit. The communication unit is configured to receive a first packet from a first node, where the first packet includes routing information of the first node and first identification information of the first node, and the first identification information indicates that the first node belongs to a first cloud platform system. If the first identification information is the same as second identification information of the second node, the processing unit is configured to update a static routing table of the second node based on the routing information of the first node.

In a possible implementation, the processing unit is further configured to: if the first identification information is different from the second identification information of the second node, determine that the first node and the second node belong to different cloud platform systems.

In a possible implementation, the communication unit is further configured to send first indication information to the first node, where the first indication information indicates that the first node and the second node belong to different cloud platform systems.

In a possible implementation, the communication unit is further configured to receive a second packet from a third node, where the second packet does not include identification information. The communication unit is further configured to discard the second packet.

In a possible implementation, the routing information of the first node includes an IP address of the first node and a MAC address of the first node.

In a possible implementation, the first identification information or the second identification information is at least one of identity information, a certificate password, or a key.

In a possible implementation, a priority of routing information in the static routing table of the second node is higher than a priority of routing information of a third packet, and the routing information of the third packet is configured according to an address resolution protocol or a neighbor discovery protocol.

According to a fifth aspect, this application provides a communication apparatus. The communication apparatus may be a device like a server, a virtual machine, or a controller designed based on a virtualization technology, or may be an apparatus of the foregoing device, or an apparatus that can be used together with the foregoing device. In a possible implementation, the communication apparatus may include a functional module. The functional module may be a hardware circuit, or may be software, or may be implemented by a hardware circuit in combination with software.

In a possible implementation, the communication apparatus includes a communication unit and a processing unit. The processing unit is configured to generate a first packet, where the first packet includes routing information of the first node and first identification information of the first node, and the first identification information indicates that the first node belongs to a first cloud platform system. The communication unit is configured to send the first packet.

In a possible implementation, the routing information of the first node includes an IP address of the first node and a MAC address of the first node.

In a possible implementation, the first identification information is at least one of identity information, a certificate password, or a key.

For the fourth aspect and the fifth aspect, in an example, the processing unit may be a processor, and the communication unit may be a transceiver unit, a transceiver, or a communication interface. It may be understood that when the communication apparatus is a communication device (for example, a terminal or a network device), the communication unit may be a transceiver (for example, and the transceiver includes a transmitter and a receiver) in the communication apparatus, for example, implemented by using an antenna, a feeder, and a codec in the communication apparatus. If the communication apparatus is a chip disposed in a device, the processing unit may be a processing circuit, a logic circuit, or the like of the chip, and the communication unit may be an input/output interface of the chip, for example, an input/output circuit or a pin.

According to a sixth aspect, this application provides a communication apparatus, including a processor, configured to execute instructions. Optionally, the communication apparatus further includes a memory. The memory is configured to store the instructions. When the instructions are executed by the processor, the communication apparatus is caused to implement at least one of the following: the method according to any one of the first aspect and the possible implementations of the first aspect, and the method according to any one of the second aspect and the possible implementations of the second aspect. Optionally, the processor is coupled to a memory.

According to a seventh aspect, this application provides a computer-readable storage medium, where the computer-readable storage medium stores instructions. When the instructions are run on a computer, the computer is caused to perform at least one of the following: the method according to any one of the first aspect and the possible implementations of the first aspect, and the method according to any one of the second aspect and the possible implementations of the second aspect.

According to an eighth aspect, this application provides a chip system. The chip system includes a processor and an interface. Optionally, the device may further include a memory, configured to implement at least one of the following: the method according to any one of the first aspect and the possible implementations of the first aspect, and the method according to any one of the second aspect and the possible implementations of the second aspect. The chip system may include a chip, or may include a chip and another discrete component.

According to a ninth aspect, this application provides a computer program product, including instructions. When the instructions are run on a computer, the computer is caused to perform at least one of the following: the method according to any one of the first aspect and the possible implementations of the first aspect, and the method according to any one of the second aspect and the possible implementations of the second aspect.

According to a tenth aspect, this application provides a communication system, where the communication system includes at least one apparatus or device in the fourth aspect to the sixth aspect, so that the at least one apparatus or device performs at least one of the following: the method according to any one of the first aspect and the possible implementations of the first aspect, and the method according to any one of the second aspect and the possible implementations of the second aspect.

### BRIEF DESCRIPTION OF DRAWINGS

FIG. 1 is a diagram of a communication system according to this application;
FIG. 2 is a schematic flowchart of a communication method according to this application;
FIG. 3A and FIG. 3B are a schematic flowchart of another communication method according to this application;
FIG. 4 is a diagram of a communication apparatus according to this application; and
FIG. 5 is a diagram of another communication apparatus according to this application.

### DESCRIPTION OF EMBODIMENTS

In embodiments of this application, "/" may indicate an "or" relationship between associated objects. For example, A/B may indicate A or B. "and/or" may indicate that there are three relationships between associated objects. For example, A and/or B may indicate the following three cases: Only A exists, both A and B exist, and only B exists, where A and B may be singular or plural. For ease of describing the technical solutions in embodiments of this application, in embodiments of this application, words such as "first" and "second" may be used to distinguish between technical features with a same or similar function. The terms such as "first" and "second" do not limit a quantity or an execution sequence, and the terms such as "first" and "second" do not indicate a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word like "example" or "for example" is used to present a related concept in a specific manner for ease of understanding.

The following describes the technical solutions in embodiments of this application with reference to the accompanying drawings in embodiments of this application.
1. For ease of understanding, the following describes in detail definitions of related nouns in this application.
   1. A network function virtualization (network function virtualization, NFV) technology is used to migrate functions of network elements used in a telecommunication network from a current dedicated hardware platform to a universal connection oriented transfer service (connection oriented transfer service, COTS) server. The NFV technology is used to convert each network element used in the telecommunication network into an independent application, and may be flexibly deployed on a unified infrastructure platform constructed based on other devices such as a standard server, a storage device, and a switch. A basis of the NFV technology includes a cloud computing technology and a virtualization technology. Hardware devices such as COTS computing, storage, and network devices may be virtualized into various virtual resources by using the virtualization technology, for use by upper-layer applications. The virtualization technology is used to decouple applications from hardware, greatly increasing a virtual resource provisioning speed. The cloud computing technology can be used to implement elastic scaling of applications and match virtual resources with service loads. This not only improves utilization efficiency of the virtual resources, but also improves a system response rate.
   2. A cloud platform node is a network device or a server of a cloud computing network infrastructure. The cloud platform node type includes a cloud platform management device and a cloud platform network device. For example, the cloud platform management device may include a server, a controller, and the like; and the cloud platform network device may include a server, a virtual machine, and the like.

Optionally, a network connecting the cloud platform management device and the cloud platform network device is referred to as a cloud platform management plane network. The cloud platform management plane network may implement a cloud platform management operation, and is mainly configured to manage various operations and resources of the cloud platform. The management plane network of the cloud platform is usually a layer 2 network, and a management internet protocol (Internet protocol, IP) address is usually a default planned private IP address.

3. Cloud platform system: Each cloud platform system may include one or more cloud platform nodes, data isolation exists between cloud platform systems, and data is not transmitted between nodes in different cloud platform systems. For example, it is assumed that the first cloud platform system includes a first node, and the second cloud platform system includes a second node. When the two cloud platform systems normally transmit data, data cannot be exchanged between the first cloud platform system and the second cloud platform system, that is, data cannot be transmitted between the first node and the second node. Generally, the cloud platform node uses a default private IP address. Optionally, different cloud platform nodes belonging to different cloud platforms may be configured with a same IP address.

4. A static routing table is a fixed routing table set by a system administrator in advance. Generally, the static routing table is preset based on a network configuration during system installation, and does not change with a network structure. The static routing table is mainly used to record an IP address of a device and a corresponding media access control (media access control, MAC) address. For example, a static routing table of a second node includes routing information of a first node in a second cloud platform system, so that the second node can communicate with the first node based on the routing information of the first node in the static routing table. The static routing table in this application is obtained by the cloud platform node in the cloud platform system by using the method in this application, and a priority of the static routing table is higher than a priority of a dynamic routing table.

5. A dynamic routing table is a routing table generated based on a standard network protocol like an address resolution protocol (address resolution protocol, ARP) or a neighbor discovery protocol (neighbor discovery, ND).

The ARP protocol is a protocol used to convert an IP address into a MAC address in an internet protocol version 4 (Internet protocol version 4, IPv4), and is mainly used to provide a correspondence between an IP address and a MAC address of a device in a local area network. The ARP protocol enables different devices to obtain a corresponding MAC address based on an IP address of a peer device during network communication, to ensure that a data packet can be correctly transmitted to the peer device. The ND protocol is a neighbor discovery protocol that provides a correspondence between an IPv6 address and a MAC address in an internet protocol version 6 (Internet protocol version 6, Ipv6), and is mainly used for neighbor discovery, address resolution, router discovery, redirection, and the like. The ND protocol may be further used to provide a correspondence between an IPv6 address and a MAC address of a device in a local area network, so that when different devices communicate with each other, a corresponding MAC address may be obtained based on an IPv6 address of a peer device, to ensure that a data packet can be accurately transmitted to the peer device.

2. For ease of understanding of embodiments of this application, the following describes the communication method provided in embodiments of this application.

### 1. Communication system:

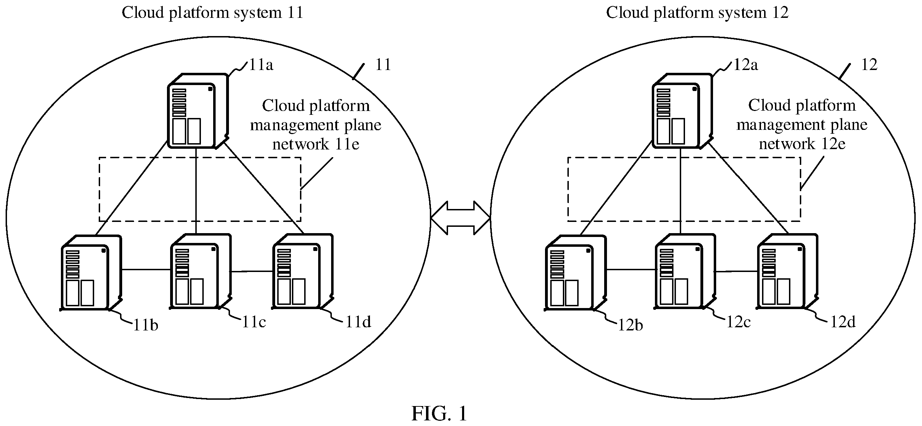

FIG. 1 is a diagram of a communication system according to this application. The communication system includes a cloud platform system 11 and a cloud platform system 12 that include one or more cloud platform nodes. It may be understood that, in the communication system, a quantity of cloud platform nodes is not limited in this application. As shown in FIG. 1, the cloud platform system 11 may specifically include a node 11a, a node 11b, a node 11c, and a node 11d. The cloud platform system 12 may specifically include a node 12a, a node 12b, a node 12c, and a node 12d. The node 11a and the node 12a are respectively cloud platform management devices in the cloud platform system 11 and the cloud platform system 12, and the cloud platform management device is connected to each cloud platform network device in the cloud platform system. The node 11b, the node 11c, and the node 11d are cloud platform network devices of the cloud platform system 11, and the node 12b, the node 12c, and the node 12d are cloud platform network devices of the cloud platform system 12. The cloud platform management device and the cloud platform network device are collectively referred to as a cloud platform node.

Optionally, a cloud platform management plane network refers to a network used to connect a cloud platform management device and a cloud platform network device in a same cloud platform system. For example, a cloud platform management plane network 11e is a cloud platform management plane network of the cloud platform system 11, and a cloud platform management plane network 12e is a cloud platform management plane network of the cloud platform system 12.

Data cannot be exchanged between cloud platform nodes in different cloud platform systems. For example, in the cloud platform system 11, any two cloud platform nodes in the node 11a, the node 11b, the node 11c, and the node 11d may implement point-to-point communication through a network connection, and specifically, may perform point-to-point communication through a wired communication link or a wireless communication link. However, a node in the cloud platform system 11 cannot communicate with another node (for example, the node 12a, the node 12b, the node 12c, or the node 12d in the cloud platform system 12 shown in FIG. 1) outside the cloud platform system 11.

It should be noted that the node 11a, the node 11b, the node 11c, and the node 11d in the cloud platform system 11 shown in FIG. 1, and the node 12a, the node 12b, the node 12c, and the node 12d in the cloud platform system 12 may all be independent physical servers, or may alternatively be a virtual machine or a controller, or may be a cloud server that provides basic cloud computing services such as cloud service, cloud database, cloud computing, cloud function, cloud storage, network service, cloud communication, middleware service, domain name service, security service, content delivery network (content delivery network, CDN), and big data.

In the communication system shown in FIG. 1, the node 11d and the node 12b respectively belong to the cloud platform system 11 and the cloud platform system 12. It is assumed that IP addresses of the node 11d and the node 12b are the same. Because the cloud platform system 11 and the cloud platform system 12 may transmit data to each other due to a network configuration error, for the node 11d and the node 12b having a same IP address, the node 11d may receive data sent to the node 12b. Consequently, the node 12b does not receive the data, resulting in problems such as incorrect data forwarding. Therefore, this application provides a communication method, so that even if different cloud platform systems are interconnected and a network address conflict occurs, nodes in a same cloud platform system can still perform normal communication based on a static routing table, thereby avoiding problems such as incorrect data forwarding and service interruption between different cloud platform systems.

### 2. The communication method provided in this application:

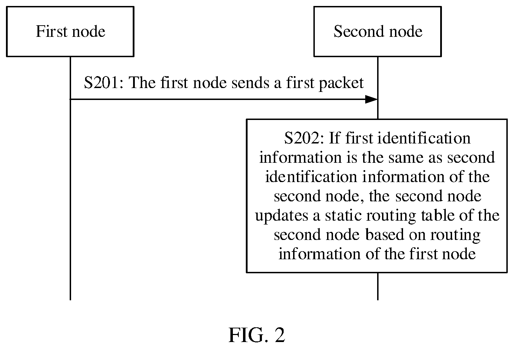

FIG. 2 is a schematic flowchart of a communication method according to this application. The method may be implemented through interaction between a first node and a second node. For example, the first node or the second node is a cloud platform network device (for example, a server or a virtual machine) in a cloud platform system. For another example, the first node is a cloud platform management device in the cloud platform system, and the second node is a cloud platform network device in the cloud platform system. The method includes but is not limited to the following steps.

S201: A first node sends a first packet, and correspondingly, a second node receives the first packet.

The first packet includes routing information of the first node and first identification information of the first node, and the first identification information indicates that the first node belongs to a first cloud platform system.

The routing information of the first node includes an IP address of the first node and a MAC address of the first node, to indicate a source IP address and a source MAC address of the first packet. For example, the routing information of the first node includes an IP address a of the first node and a MAC address b of the first node, so that it may be indicated that the source IP address and the source MAC address of the first packet are respectively the IP address a and the MAC address b.

The first identification information of the first node is identification information that is generated by the first cloud platform system and that uniquely identifies the first cloud platform system, and each node in the first cloud platform system carries the first identification information (where the first node belongs to the first cloud platform system). For example, the first cloud platform system generates the first identification information, and each node (including the first node) in the first cloud platform system carries the first identification information. In other words, cloud platform nodes belonging to a same cloud platform system carry same identification information.

Optionally, cloud platform nodes belonging to different cloud platform systems may carry different identification information. For example, if the first node carries the first identification information and the second node carries second identification information, it indicates that the first node and the second node belong to different cloud platform systems. Optionally, the first identification information or the second identification information is at least one of identity information, a certificate password, or a key.

S202: If the first identification information is the same as second identification information of the second node, the second node updates a static routing table of the second node based on the routing information of the first node.

Similar to a definition of the first identification information, the second identification information of the second node is identification information that is generated by a second cloud platform system and that uniquely identifies the second cloud platform system, and each node in the second cloud platform system carries the second identification information (where the second node belongs to the second cloud platform system). For example, the second cloud platform system generates the second identification information, and each node (including the second node) in the second cloud platform system carries the second identification information. If the first node carries the first identification information, and the first node belongs to the second cloud platform system, the first identification information and the second identification information are same identification information. The second node receives the first packet sent by the first node, and parses the first packet to obtain the first identification information, to determine that the first identification information carried by the first node is the same as the second identification information of the second node. In other words, the first node and the second node belong to a same cloud platform system, and can perform data transmission.

The static routing table of the second node includes routing information between different cloud platform nodes in the second cloud platform system, and the second node cannot update the static routing table of the second node based on routing information configured according to an ARP protocol or an ND protocol. For example, based on the foregoing assumption information, the second node determines that the first identification information carried by the first node is the same as the second identification information of the second node, to determine that the first node and the second node belong to a same cloud platform system. The second node may update the static routing table of the second node based on the routing information of the first node (for example, add the routing information of the first node to the static routing table of the second node), so that the second node can communicate with the first node based on the static routing table.

Optionally, it is assumed that the routing information carried in the first packet is configured according to the APR protocol or the ND protocol, and that a priority of the routing information is lower than a priority of routing information in the static routing table of the second node. Therefore, the second node cannot update the static routing table of the second node based on the routing information in the first packet. Optionally, the second node discards the first packet. For example, the second node may determine, based on the routing information in the first packet, that the routing information in the first packet is configured according to the APR protocol or the ND protocol. Because the priority of the routing information configured according to the APR protocol or the ND protocol is lower than the priority of the routing information in the static routing table of the second node, the second node determines that the static routing table of the second node cannot be updated based on the routing information in the first packet (for example, the routing information of the first node is not added to the static routing table of the second node). In this case, the second node discards the first packet.

Optionally, if the first identification information is different from the second identification information of the second node, specific implementation of S202 may be the following procedure.

If the first identification information is different from the second identification information of the second node, the second node determines that the first node and the second node belong to different cloud platform systems.

For example, it is assumed that the first node belongs to the first cloud platform system, and carried identification information is the first identification information; and the second node belongs to the second cloud platform system, and carried identification information is the second identification information. It is assumed that data exchange between the first cloud platform system and the second cloud platform system is caused by a network configuration error. The second node receives the first packet sent by the first node, and parses the first packet to obtain the first identification information. The second node determines that the first identification information carried by the first node is different from the second identification information of the second node, so that the second node can determine that the first node and the second node belong to different cloud platform systems. Optionally, the second node discards the first packet. For example, when the second node determines that the first node and the second node belong to different cloud platform systems, the second node discards the first packet sent by the first node.

Optionally, if the first identification information is different from the second identification information of the second node, the interaction procedure between the first node and the second node further includes the following operations.

The second node sends the first indication information to the first node. Correspondingly, the first node receives the first indication information.

The first indication information indicates that the first node and the second node belong to different cloud platform systems.

For example, it is assumed that the first node belongs to the first cloud platform system, and the second node belongs to the second cloud platform system. It is assumed that data exchange between the first cloud platform system and the second cloud platform system is caused by a network configuration error. The second node receives the first packet sent by the first node. When the second node determines that the first node and the second node belong to different cloud platform systems, the second node sends first indication information to the first node. Correspondingly, the first node receives the first indication information sent by the second node. The first node may determine, based on the first indication information, that the first node and the second node belong to different cloud platform systems, to prevent the first node from incorrectly forwarding data to the second node again.

In the embodiment, identification information is introduced to distinguish between packets from different cloud platform systems. For example, the first identification information is the identification information that identifies the first cloud platform system, and each cloud platform node in the first cloud platform system includes the first identification information (therefore, a packet sent by each cloud platform node also includes the first identification information). In this way, a cloud platform system to which a packet sending node belongs is distinguished by using identification information in the packet. If the packet sending node and a packet receiving node are cloud platform nodes of a same cloud platform system, the packet can be normally forwarded between the two nodes. In addition, a neighbor entry used for normal communication between nodes in the cloud platform system may be configured as a static routing table, and the static routing table includes routing information between different cloud platform nodes in a same cloud platform system. Therefore, even if different cloud platform systems are interconnected and a network address conflict occurs, nodes in a same cloud platform system can still perform normal communication based on the static routing table, thereby avoiding problems such as incorrect data forwarding and service interruption between different cloud platform systems.

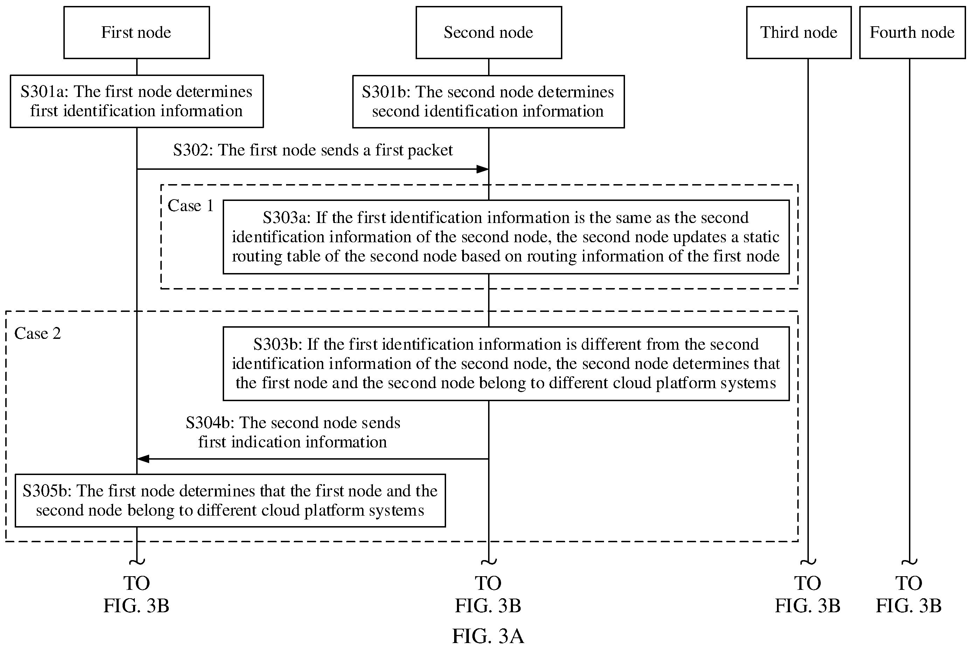

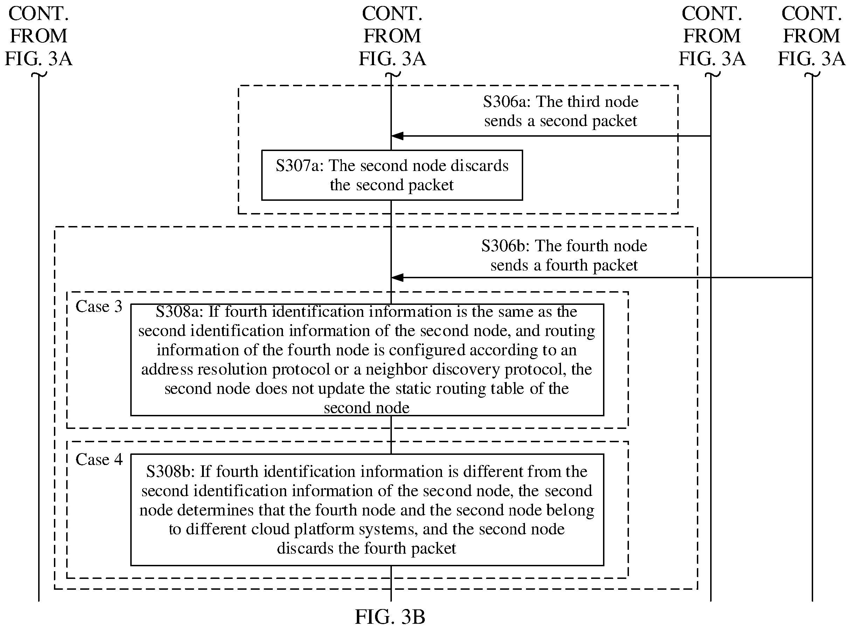

FIG. 3A and FIG. 3B are a schematic flowchart of another communication method according to this application. The method may be implemented through interaction between a first node, a second node, a third node, and a fourth node. For example, the first node, the second node, the third node, or the fourth node is a cloud platform network device (for example, a server or a virtual machine) in a cloud platform system. The method includes but is not limited to the following steps.

S301a: A first node determines first identification information.

For example, the first node receives the first identification information from a cloud platform management device in a first cloud platform system, to determine the first identification information.

S301b: A second node determines second identification information.

For example, the second node receives the second identification information from a cloud platform management device in a second cloud platform system, to determine the second identification information.

S302: The first node sends a first packet, and correspondingly, the second node receives the first packet.

For a specific implementation of S302, refer to related descriptions of S201 in the foregoing embodiment. Details are not described herein again.

Optionally, after S302, interaction between the first node and the second node further includes the following cases.

Case 1: If the first identification information is the same as the second identification information of the second node, an operation performed by the second node includes:
S303a: If the first identification information is the same as the second identification information of the second node, the second node updates a static routing table of the second node based on routing information of the first node.

For a specific implementation of S303a, refer to related descriptions of S202 in the foregoing embodiment. Details are not described herein again.

Case 2: If the first identification information is different from the second identification information of the second node, an operation performed by the second node includes:
S303b: If the first identification information is different from the second identification information of the second node, the second node determines that the first node and the second node belong to different cloud platform systems.

For a specific implementation of S303b, refer to related descriptions of a specific implementation procedure in the foregoing embodiment in which the first identification information is different from the second identification information of the second node. Details are not described herein again.

S304b: The second node sends first indication information to the first node.

S305b: The first node determines that the first node and the second node belong to different cloud platform systems.

For specific implementations of S304b and S305b, refer to related descriptions of an interaction procedure between the first node and the second node in the foregoing embodiment in which the first identification information is different from the second identification information of the second node. Details are not described herein again.

Optionally, a third node is further introduced in this embodiment. The third node may be a cloud platform network device (for example, a server or a virtual machine) in the cloud platform system, or may be a node in an external network system. Interaction between the second node and the third node includes:
S306a: The third node sends a second packet to the second node, where the second packet does not include identification information.
S307a: The second node discards the second packet.

That the second packet does not include the identification information means that the second packet does not include identification information of any cloud platform system. Therefore, when receiving the packet that does not carry the identification information, the second node cannot determine a node of a cloud platform system from which the second packet comes. For example, it is assumed that the second node belongs to the second cloud platform system, the third node belongs to a third cloud platform system, and identification information that is generated by the third cloud platform system and that uniquely identifies the third cloud platform system is third identification information. It is assumed that data exchange between the second cloud platform system and the third cloud platform system is caused by a network configuration error. The second node receives the second packet sent by the third node, where the second packet does not carry the third identification information of the third cloud platform system. Therefore, when the second node receives the second packet sent by the third node, the second node cannot determine, based on the identification information, the node of the cloud platform system from which the second packet comes, and the second packet may be discarded. Optionally, the third identification information is at least one of identity information, a certificate password, or a key. Optionally, the third node may alternatively be a node in an external network system (for example, the third node is not a node in the cloud platform system, but sends the packet to the second node based on an IP address and a MAC address of the second node).

Optionally, a fourth node is further introduced in this embodiment. The fourth node is a node in the cloud platform system. An operation performed by the fourth node includes:

S306b: The fourth node sends a fourth packet to the second node, where the fourth packet includes routing information of the fourth node and fourth identification information of the fourth node, and the fourth identification information indicates that the fourth node belongs to a fourth cloud platform system.

The routing information of the fourth node includes an IP address of the fourth node and a MAC address of the fourth node, to indicate a source IP address and a source MAC address of the fourth packet. For example, the routing information of the fourth node includes the IP address m of the fourth node and the MAC address n of the fourth node, to indicate that the source IP address and the source MAC address of the fourth packet are respectively the IP address m and the MAC address n.

Similar to a definition of the first identification information, the fourth identification information of the fourth node is identification information that is generated by the fourth cloud platform system and that uniquely identifies the fourth cloud platform system, and each node in the fourth cloud platform system carries the fourth identification information (where the fourth node belongs to the fourth cloud platform system). For example, the fourth cloud platform system generates the fourth identification information, and each node (including the fourth node) in the fourth cloud platform system carries the fourth identification information.

Optionally, after S306b, interaction between the fourth node and the second node further includes the following cases.

Case 3: If the fourth identification information is the same as the second identification information of the second node, an operation performed by the second node includes:
S308a: If the fourth identification information is the same as the second identification information of the second node, and routing information of the fourth node is configured according to the address resolution protocol or the neighbor discovery protocol, the second node does not update the static routing table of the second node.

The routing information of the fourth node is configured according to the ARP protocol or the ND protocol, and a priority of the routing information is lower than the priority of the routing information in the static routing table of the second node. Therefore, the second node cannot update the static routing table of the second node based on the routing information of the fourth node, and the second node discards the fourth packet. For example, if the fourth node carries the fourth identification information, and the fourth node belongs to the second cloud platform system, the fourth identification information and the second identification information are same identification information. The second node receives the fourth packet sent by the fourth node, and parses the fourth packet to obtain the fourth identification information. The second node determines that the fourth identification information carried by the fourth node is the same as the second identification information of the second node, that is, the fourth node and the second node belong to a same cloud platform system. The second node may determine, based on the routing information in the fourth packet, that the routing information in the fourth packet is configured according to the ARP protocol or the ND protocol. In this case, the second node cannot update the static routing table of the second node based on the routing information in the fourth packet (for example, the routing information of the fourth node is not added to the static routing table of the second node), and the second node discards the fourth packet. Optionally, the fourth identification information is at least one of identity information, a certificate password, or a key.

Case 4: If the fourth identification information is different from the second identification information of the second node, an operation performed by the second node includes:
S308b: If the fourth identification information is different from the second identification information of the second node, the second node determines that the fourth node and the second node belong to different cloud platform systems, and the second node discards the fourth packet.

For example, it is assumed that data exchange between the fourth cloud platform system and the second cloud platform system is caused by a network configuration error. The second node receives the fourth packet sent by the fourth node, and parses the fourth packet to obtain the fourth identification information. The second node determines that the fourth identification information carried by the fourth node is different from the second identification information of the second node, so that the second node may determine that the second node and the fourth node belong to different cloud platform systems, and the second node discards the fourth packet.

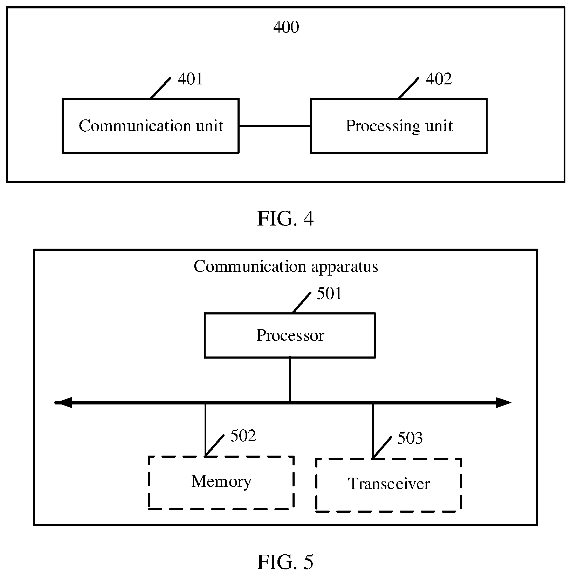

FIG. 4 is a diagram of a communication apparatus according to this application. The apparatus may include modules that are in a one-to-one correspondence with the methods/operations/steps/actions described in any one of embodiments shown in FIG. 2 and FIG. 3A and FIG. 3B. The modules may be implemented by a hardware circuit, software, or a combination of a hardware circuit and software.

The apparatus 400 includes a communication unit 401 and a processing unit 402, configured to implement the methods performed by the devices in the foregoing embodiments. The communication unit 401 is also referred to as a transceiver unit. The transceiver unit includes a sending unit and a receiving unit. The sending unit is configured to send a signal, and the receiving unit is configured to receive a signal.

In a possible implementation, the apparatus may be a device like a server, a virtual machine, or a controller designed based on a virtualization technology, or may be an apparatus of the foregoing device, or an apparatus that can be used together with the foregoing device. Specifically, the communication unit 401 is configured to receive a first packet from a first node, where the first packet includes routing information of the first node and first identification information of the first node, and the first identification information indicates that the first node belongs to a first cloud platform system. If the first identification information is the same as second identification information of the second node, the processing unit 402 is configured to update a static routing table of the second node based on the routing information of the first node.

Optionally, the processing unit 402 is configured to process information sent or received by the communication unit 401. For example, the processing unit 402 is configured to: process the first packet received by the communication unit 401; and if the first identification information is different from the second identification information of the second node, determine that the first node and the second node belong to different cloud platform systems.

For specific execution procedures of the communication unit 401 and the processing unit 402 in this implementation, refer to the descriptions of the steps performed by the second node in the foregoing method embodiments and related descriptions. Details are not described herein again. In this method, identification information is introduced to distinguish packets from different cloud platform systems. For example, the first identification information is identification information that identifies the first cloud platform system, and each cloud platform node in the first cloud platform system includes the first identification information (therefore, a packet sent by each cloud platform node also includes the first identification information). In this way, a cloud platform system to which a packet sending node belongs is distinguished by using identification information in the packet. If the packet sending node and a packet receiving node are cloud platform nodes of a same cloud platform system, the packet can be normally forwarded between the two nodes. In addition, a neighbor entry used for normal communication between nodes in the cloud platform system may be configured as a static routing table, and the static routing table includes routing information between different cloud platform nodes in a same cloud platform system. Therefore, even if different cloud platform systems are interconnected and a network address conflict occurs, nodes in a same cloud platform system can still perform normal communication based on the static routing table, thereby avoiding problems such as incorrect data forwarding and service interruption between different cloud platform systems.

In a possible implementation, the apparatus may be a device like a server, a virtual machine, or a controller designed based on a virtualization technology, or may be an apparatus of the foregoing device, or an apparatus that can be used together with the foregoing device. Specifically, the processing unit 402 is configured to generate a first packet, where the first packet includes routing information of the first node and first identification information of the first node, and the first identification information indicates that the first node belongs to a first cloud platform system. The communication unit 401 is configured to send the first packet.

For specific execution procedures of the communication unit 401 and the processing unit 402 in this implementation, refer to the descriptions of the steps performed by the first node in the foregoing method embodiments and related descriptions. Details are not described herein again. In this method, identification information is introduced to distinguish packets from different cloud platform systems. For example, the first identification information is the identification information that identifies the first cloud platform system, and each cloud platform node in the first cloud platform system includes the first identification information (therefore, a packet sent by each cloud platform node also includes the first identification information). In this way, a cloud platform system to which a packet sending node belongs is distinguished by using identification information in the packet. If the packet sending node and a packet receiving node are cloud platform nodes of a same cloud platform system, the packet can be normally forwarded between the two nodes, thereby avoiding problems such as incorrect data forwarding and service interruption between different cloud platform systems.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

FIG. 5 is a diagram of another communication apparatus according to this application. The communication apparatus may be configured to perform the steps performed by the first node or the second node in the foregoing method embodiments. For details, refer to related descriptions in the foregoing method embodiments.

The communication apparatus includes a processor 501. Optionally, the communication apparatus further includes a memory 502 and a transceiver 503.

In a possible implementation, the processor 501, the memory 502, and the transceiver 503 are separately connected through a bus, and the memory stores computer instructions.

Optionally, the processing unit 402 in the foregoing embodiment may be specifically the processor 501 in this embodiment. Therefore, specific implementation of the processor 501 is not described again. The communication unit 401 in the foregoing embodiment may be specifically the transceiver 503 in this embodiment. Therefore, specific implementation of the transceiver 503 is not described again.

In this application, the processor may be a general purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general purpose processor may be a microprocessor or any conventional processor or the like. The steps of the method disclosed with reference to this application may be directly performed by a hardware processor, or may be performed by using a combination of hardware in the processor and a software module.

In this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of instructions or data structure and that can be accessed by a computer, but is not limited thereto. The memory in this application may alternatively be a circuit or any other apparatus that can implement a storage function, and is configured to store program instructions and/or data.

This application provides another communication apparatus. The device includes a processor and an interface. Optionally, a memory is further included. The processor is coupled to the memory, and the processor is configured to read and execute computer instructions stored in the memory, to implement the communication methods in embodiments shown in FIG. 2 and FIG. 3A and FIG. 3B.

This application provides a computer-readable storage medium. The computer-readable storage medium stores a program or instructions. When the program or the instructions are run on a computer, the computer is caused to perform the communication methods in embodiments shown in FIG. 2 and FIG. 3A and FIG. 3B.

This application provides a chip or a chip system. The chip or the chip system includes at least one processor and an interface. The interface and the at least one processor are interconnected through a line. The at least one processor is configured to run a computer program or instructions, to perform the communication methods in embodiments shown in FIG. 2 and FIG. 3A and FIG. 3B. The interface in the chip may be an input/output interface, a pin, a circuit, or the like.

The chip system may be a system-on-a-chip (system-on-a-chip, SOC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

This application provides a computer program product. The computer program product includes instructions. When the instructions are run on a computer, the computer is caused to perform the communication methods in embodiments shown in FIG. 2 and FIG. 3A and FIG. 3B.

An embodiment of this application further provides a communication system. The communication system includes a first communication apparatus and a second communication apparatus. The first communication apparatus is configured to perform all or some of the steps performed by the second node in the foregoing embodiments. The second communication apparatus is configured to perform all or some of the steps performed by the first node in the foregoing embodiments.

All or some of the technical solutions provided in this application may be implemented by using software, hardware, firmware, or any combination thereof. When software is used to implement the methods, all or some of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, on the premise that there is no logical conflict, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clearly that a person skilled in the art can make various modifications and variations to this application without departing from the scope of this application. This application is intended to cover these modifications and variations of this application provided that they fall within the scope of the claims of this application and equivalent technologies thereof.

## Claims

1. A communication method, comprising:
receiving a first packet from a first node, wherein the first packet comprises routing information of the first node and first identification information of the first node, and the first identification information indicates that the first node belongs to a first cloud platform system; and
if the first identification information is the same as second identification information of a second node, updating a static routing table of the second node based on the routing information of the first node.

2. The method according to claim 1, wherein after the receiving a first packet from a first node, the method further comprises:
if the first identification information is different from the second identification information of the second node, determining that the first node and the second node belong to different cloud platform systems.

3. The method according to claim 2, wherein the method further comprises:
sending first indication information to the first node, wherein the first indication information indicates that the first node and the second node belong to different cloud platform systems.

4. The method according to any one of claims 1 to 3, wherein the method further comprises:
receiving a second packet from a third node, wherein the second packet does not comprise identification information; and
discarding the second packet.

5. The method according to claim 1, wherein the routing information of the first node comprises an internet protocol IP address of the first node and a media access control MAC address of the first node.

6. The method according to claim 1 or 2, wherein the first identification information or the second identification information is at least one of identity information, a certificate password, or a key.

7. The method according to claim 1, wherein a priority of routing information in the static routing table of the second node is higher than a priority of routing information of a third packet, and the routing information of the third packet is configured according to an address resolution protocol or a neighbor discovery protocol.

8. A communication method, comprising:
generating a first packet, wherein the first packet comprises routing information of a first node and first identification information of the first node, and the first identification information indicates that the first node belongs to a first cloud platform system; and
sending the first packet.

9. The method according to claim 8, wherein the routing information of the first node comprises an IP address of the first node and a MAC address of the first node.

10. The method according to claim 8, wherein the first identification information is at least one of identity information, a certificate password, or a key.

11. A communication method, comprising:
performing, by a first communication apparatus, the method according to any one of claims 1 to 7; and
performing, by a second communication apparatus, the method according to any one of claims 8 to 10.

12. A communication apparatus, comprising a communication unit and a processing unit, wherein the communication unit and the processing unit are configured to perform the method according to any one of claims 1 to 7 or claims 8 to 10.

13. A communication apparatus, comprising: a processor, configured to cause, by using a logic circuit and/or executing instructions, the communication apparatus to perform the method according to any one of claims 1 to 7or claims 8 to 10.

14. The apparatus according to claim 13, further comprising a memory, wherein the memory is configured to store the instructions.

15. A computer-readable storage medium, wherein the computer-readable storage medium stores instructions, and when the instructions are run on a computer, the computer is caused to perform the method according to any one of claims 1 to 7 or claims 8 to 10.

16. A chip system, wherein the chip system comprises a processor and an interface, and the processor is configured to execute a computer program, to cause the chip system to implement the method according to any one of claims 1 to 7 or claims 8 to 10.

17. A computer program product, comprising instructions, wherein when the instructions are run on a computer, the computer is caused to perform the method according to any one of claims 1 to 7 or claims 8 to 10.

18. A communication system, wherein the communication system comprises an apparatus configured to perform the method according to any one of claims 1 to 7, and an apparatus configured to perform the method according to any one of claims 8 to 10.
